Europäisches Patentamt

European Patent Office

Office européen des brevets

(19)

(11) Numéro de publication : **0 380 395 B1**

(12) # FASCICULE DE BREVET EUROPEEN

(45) Date de publication du fascicule du brevet :
**15.07.92 Bulletin 92/29**

(51) Int. Cl.⁵ : **G01D 5/26,** G08C 23/00

(21) Numéro de dépôt : **90400169.0**

(22) Date de dépôt : **22.01.90**

(54) **Procédé de surveillance séquentielle par voie optique d'une installation avec signal de sortie constant.**

(30) Priorité : **27.01.89 FR 8901061**

(43) Date de publication de la demande :
**01.08.90 Bulletin 90/31**

(45) Mention de la délivrance du brevet :
**15.07.92 Bulletin 92/29**

(84) Etats contractants désignés :
**AT BE CH DE GB IT LI LU NL SE**

(56) Documents cités :
**EP-A- 0 008 267**
**EP-A- 0 206 901**
**EP-A- 0 278 820**
**US-A- 4 367 040**
**US-A- 4 683 374**
**PATENT ABSTRACTS OF JAPAN, vol. 9, no.
163 (P-371)[1886], 9 juillet 1985; & JP-A-60 40
910 (TATEISHI DENKI K.K.)04-03-1985**

(73) Titulaire : **FRAMATOME
Tour Fiat 1, Place de la Coupole
F-92400 Courbevoie (FR)**

(72) Inventeur : **Meyer, Jacques
3, rue René Brulay
F-78500 Sartrouville (FR)**
Inventeur : **Bouchet, Jean-Michel
124 Boulevard de la République
F-92210 Saint Cloud (FR)**

(74) Mandataire : **Bouget, Lucien et al
Cabinet Lavoix 2, Place d'Estienne d'Orves
F-75441 Paris Cédex 09 (FR)**

## Description

L'invention concerne un procédé de surveillance séquentielle par voie optique d'une installation, avec contrôle de fonctionnement des moyens de surveillance et utilisant des capteurs dont le signal de sortie est maintenu constant.

On connaît des installations industrielles qui comportent une partie active dans laquelle est effectué le processus industriel et un poste de conduite et de surveillance séparé de la zone active de l'installation par une distance qui peut être importante.

Dans la demande de brevet français FR-A-2.585.159 déposée au nom de FRAMATOME, on a décrit un procédé et un dispositif permettant de transmettre des informations et des ordres par voie optique entre un poste de commande et la partie active d'une installation.

Les informations et les ordres peuvent être transmis et exploités sous la forme de signaux tout ou rien, tout ou peu, analogiques ou encore digitaux. Dans une telle installation, toutes les informations et ordres transitent en permanence dans une même fibre optique joignant le poste de conduite à la partie active de l'installation,

Il est nécessaire de disposer, pour chacune des voies de mesure, de moyens de conversion opto-électroniques et de moyens de comparaison des signaux électriques obtenus par conversion à partir des signaux lumineux, de manière que l'opérateur puisse disposer en même temps de toutes les informations provenant de la zone active.

Dans le brevet US-A-4.367.040, on a décrit un système de mesure de température du rotor d'une machine tournante comprenant, pour chaque voie de mesure, une source lumineuse, un dispositif de conversion opto-électronique du signal émis et un dispositif de conversion opto-électronique du signal reçu. La valeur de mesure est déterminée en calculant la différence entre les deux signaux électriques obtenus par conversion du signal reçu et du signal émis respectivement.

Dans la demande de brevet japonais JP-A-56-112131, on a décrit un dispositif de transmission de signaux par voie optique comprenant un convertisseur opto-électronique du signal reçu, sur chacune des voies du dispositif de transmission.

Dans tous les dispositifs selon l'art antérieur mentionnés ci-dessus, il est nécessaire de placer un convertisseur opto-électronique sur chacune des voies de mesure. Dans le cas où les signaux transmis sont des signaux tout ou rien ou tout ou peu, chacune des voies de réception de ces signaux doit comporter un convertisseur opto-électronique.

Dans les installations industrielles, il est nécessaire de contrôler et de surveiller la position d'un grand nombre de composants tels que des vannes et le déclenchement d'appareils de contrôle tels que des pressostats ou des thermostats dont le basculement peut, dans certains cas, entraîner une alarme.

Le nombre de composants ou d'appareils associés à une installation industrielle peut varier depuis quelques centaines jusqu'à plusieurs milliers. A titre d'exemple, dans la partie chaudière d'un réacteur nucléaire à trois boucles, on estime à environ 7000 le nombre de composants dont on doit surveiller la position ou l'état.

La position ou l'état de ces composants ne connaît pas de variations fréquentes dans la plupart des cas mais il est important de savoir si un ordre donné est bien exécuté ou encore, si par suite d'une erreur de manoeuvre, une vanne ou un contacteur n'a pas changé de position de manière anormale ou encore si une grandeur physique telle que la pression ou la température n'a pas atteint une valeur limite dans certaines parties de l'installation.

On connaît également des procédés et dispositifs, par exemple décrits dans les brevets FR-A-2.410.255 et FR-A-2.436.368, dans lesquels la mesure de la grandeur physique est déterminée à partir de variations de signaux lumineux réfléchis ou transmis par le capteur. Ces signaux peuvent avoir une valeur faible ou présenter de très faibles variations, en fonction de l'état du capteur qui dépend lui-même de la grandeur physique à mesurer. Le traitement des signaux n'est donc pas toujours facile à réaliser et nécessite l'utilisation de composants électroniques à haute performance pour obtenir des résultats corrects.

On ne connaissait pas jusqu'ici de procédé de contrôle ou de surveillance d'une installation industrielle par voie optique utilisant des signaux tout ou peu et permettant de recourir à un nombre réduit de convertisseurs opto-électroniques et d'amplificateurs tout en évitant d'utiliser des composants électroniques à haute performance pour le traitement des signaux. On ne connaissait pas non plus de procédé et de dispositif permettant d'assurer en permanence un contrôle efficace du fonctionnement des moyens optiques de surveillance.

Le but de l'invention est donc de proposer un procédé de surveillance séquentielle par voie optique d'une installation, avec contrôle du fonctionnement des moyens de surveillance, consistant à émettre au moins deux signaux lumineux, à partir d'au moins deux sources lumineuses alimentées par un générateur de courant électrique, à sélectionner sur chacun des signaux lumineux un signal à bande spectrale étroite centrée sur une longueur d'onde déterminée, les longueurs d'onde des signaux sélectionnés étant toutes différentes, à faire parvenir de manière groupée les signaux de longueurs d'onde différentes dans une zone de mesure, à séparer les signaux regroupés, suivant leur longueur d'onde et à envoyer chaque signal séparé sur un capteur optique à récupérer les signaux en sortie des capteurs optiques et à les convertir en un signal électrique puis à traiter chaque signal électrique obtenu pour obtenir l'état d'un organe surveillé, ce procédé permettant d'éviter l'utilisation de nombreux convertisseurs opto-électroniques et de nombreux amplificateurs pour traiter les signaux.

Dans ce but :

– on alimente les sources lumineuses de manière séquentielle, de manière à créer des signaux lumineux successifs,

– on compare, après conversion en signal électrique, chacun des signaux lumineux successifs provenant d'une source lumineuse à deux valeurs limites prédéterminées,

– on détermine, en fonction des résultats des comparaisons effectuées, l'état de fonctionnement de chacune des sources et de chacun des moyens optiques de surveillance,

– on compare l'amplitude du signal électrique correspondant au signal de sortie obtenu successivement pour chacun des capteurs à un signal de référence,

– on commande le générateur de courant électrique, successivement, en fonction du résultat de la comparaison du signal électrique correspondant au signal de sortie de chacun des capteurs et du signal de référence, de manière à rendre égales les amplitudes des deux signaux comparés,

– on détermine l'état du paramètre surveillé par comparaison du signal de la source optique, après transformation en signal électrique, à deux valeurs prédéterminées.

L'invention est également relative à un dispositif de surveillance par voie optique d'une installation industrielle permettant de mettre en oeuvre le procédé suivant l'invention.

Afin de bien faire comprendre l'invention, on va maintenant décrire, à titre d'exemple non limitatif, en se référant aux figures jointes en annexe, plusieurs modes de réalisation d'un dispositif permettant de mettre en oeuvre le procédé suivant l'invention.

La figure 1 est une représentation schématique d'un dispositif de surveillance suivant l'invention et suivant un premier mode de réalisation.

La figure 2A est un diagramme montrant la variation au cours du temps des signaux lumineux à la sortie des capteurs optiques et la variation des signaux électriques correspondants, dans le cas d'un signal d'entrée constant.

La figure 2B est un diagramme montrant la variation au cours du temps des signaux de la source lumineuse avec signal de sortie des capteurs constant.

La figure 3 est une représentation schématique d'un dispositif de surveillance permettant la mise en oeuvre du procédé suivant l'invention et suivant un second mode de réalisation.

La figure 4 est une représentation schématique d'un dispositif de surveillance permettant la mise en oeuvre du procédé suivant l'invention et suivant un troisième mode de réalisation.

La figure 5 est une représentation schématique d'un dispositif permettant la mise en oeuvre du procédé suivant l'invention et suivant un quatrième mode de réalisation.

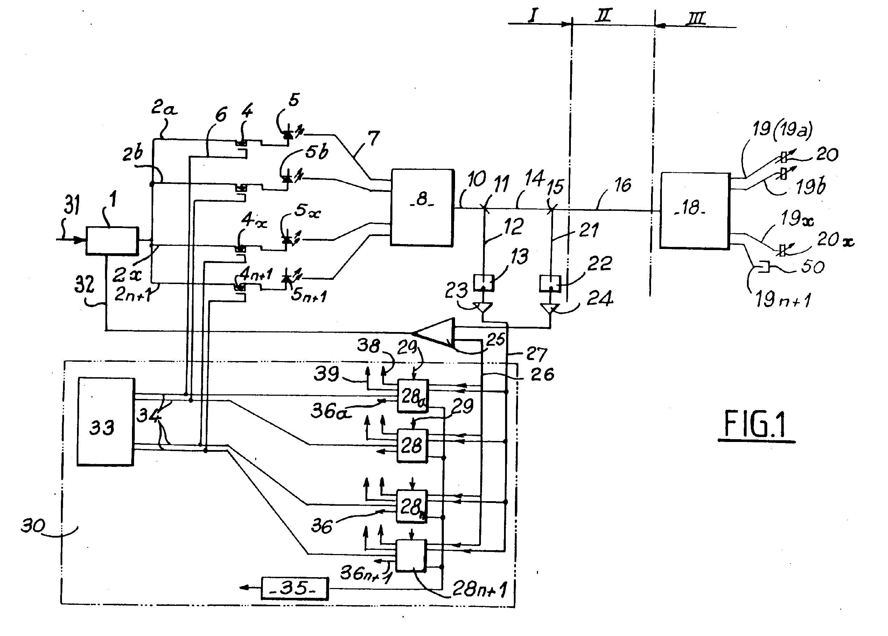

Sur la figure 1, on voit un dispositif de surveillance par voie optique suivant l'invention permettant de réaliser la surveillance d'une installation industrielle, depuis un poste de conduite éloigné de la zone active de l'installation. On a indiqué de manière schématique trois zones d'espace I, II et III séparées par des lignes verticales en traits mixtes. La zone I correspond au poste de conduite, les éléments situés à gauche de la première ligne verticale étant situés dans ce poste de conduite.

La zone III correspond à la zone active de l'installation industrielle dans laquelle on réalise la surveillance et le contrôle d'organes de cette installation qui peuvent être en très grand nombre.

Enfin, la zone II représente l'espace existant entre le poste de conduite et la zone active de l'installation.

La largeur de l'espace II peut être de plusieurs centaines de mètres et même de plusieurs kilomètres.

Le dispositif de surveillance suivant l'invention comporte, à l'intérieur du poste de commande, un générateur de courant électrique 1 alimentant plusieurs lignes disposées en parallèle 2a, 2b, 2c, ... 2n, 2n + 1.

Sur chacune des lignes sont disposés en série un module de commande 4 et une source lumineuse 5, le module de commande 4 permettant d'assurer la liaison entre le générateur de courant et la source lumineuse 5 correspondante et donc l'alimentation de la source lumineuse 5, lorsqu'un signal parvient au module de commande par l'intermédiaire d'une ligne 6.

Les sources lumineuses 5 sont constituées par des diodes électroluminescentes ayant chacune un spectre d'émission relativement large.

Chacune des sources lumineuses 5 est reliée par l'intermédiaire d'une fibre optique 7 à une entrée d'un multiplexeur 8.

Les spectres des sources lumineuses 5 sont tels que leur ensemble couvre l'étendue de la zone active spectrale du multiplexeur 8.

Par la suite, chacun des éléments de chacune des voies 2a, 2b, 2c, ... 2n + 1 sera désigné soit par son repère sans indice, soit par son repère muni d'un indice (a, b, c, ..., n+ 1), dans le cas où cet élément est associé à une ligne (2a, 2b, 2c, ..., 2n + 1).

Le multiplexeur 8 ou multiplexeur d'émission reçoit sur chacune de ses n + 1 entrées un flux lumineux à large bande spectrale et réalise une sélection d'une bande étroite de ce spectre d'une largeur de quelques manomètres, dont la longueur d'onde centrale est fonction de la position de la voie d'entrée dans le multiplexeur.

Les différents signaux lumineux à bande spectrale étroite sélectionnés par le multiplexeur d'émission 8 sont envoyés sur la voie de sortie unique de ce multiplexeur à laquelle est reliée une fibre optique 10. La fibre optique 10 reçoit donc un signal lumineux complexe constitué par la juxtaposition de n + 1 signaux, appelés signaux élémentaires, à faible largeur spectrale centrés sur une longueur d'onde bien déterminée. Les différentes longueurs d'ondes des signaux lumineux élémentaires sont toutes différentes entre elles.

La fibre 10 assure la liaison entre la sortie du multiplexeur 8 et un coupleur 11 dans lequel le flux lumineux est divisé en deux parties sensiblement égales.

Une première partie du flux lumineux est dirigée par une fibre optique 12 dans un convertisseur optoélectronique 13.

La seconde partie du flux lumineux est envoyée dans une fibre optique 14 et traverse un second coupleur 15 sans être affectée par ce coupleur.

Une fibre optique 16 de grande longueur assure la jonction entre le coupleur 15 et un multiplexeur-démultiplexeur 18 disposé dans la zone active de l'installation industrielle.

Le multiplexeur-démultiplexeur 18 dirige le signal lumineux transmis par la fibre optique 16 sur la sortie de même rang que la source lumineuse d'entrée du multiplexeur 8.

En effet, les multiplexeurs 8 et 18 sont identiques et sont constitués par des polychromateurs ayant en particulier des zones spectrales actives identiques.

Le multiplexeur-démultiplexeur 18 disposé dans la zone active de l'installation comporte n + 1 sorties à chacune desquelles est reliée une fibre optique 19 qui reçoit un signal lumineux de faible largeur spectrale centré sur une longueur d'onde déterminée.

Les longueurs d'onde centrales des signaux lumineux parcourant les différentes fibres 19a, 19b, ... 19n, 19n + 1 sont toutes différentes.

Chacune des fibres optiques 19 transmet un signal lumineux à un capteur optique à réflexion 20 assurant la surveillance ou le contrôle d'un organe de l'installation industrielle. Un tel organe peut être constitué par exemple par un interrupteur ou une vanne dont on veut surveiller l'état de fermeture ou d'ouverture.

Les capteurs 20 sont constitués, comme il sera expliqué plus loin, par des capteurs tout ou peu renvoyant une partie du signal lumineux, quel que soit leur état traduisant l'état de l'organe surveillé.

Les signaux lumineux réfléchis par les capteurs 20 sont renvoyés par les fibres 19 sur les différentes sorties du multiplexeur 18 puis les signaux sont regroupés dans la fibre optique 16, afin de parcourir l'espace séparant la zone active de l'installation du poste de conduite I.

Le flux lumineux circulant dans la fibre 16 parvient au coupleur 15, à l'intérieur du poste de commande. Le coupleur 15 assure la division du flux lumineux en deux parties sensiblement égales, dont une première partie retourne vers la source lumineuse correspondant au capteur dont on veut connaître la position, par l'intermédiaire du coupleur 11 et du multiplexeur 8. Cette première partie du flux lumineux n'affecte en rien la source lumineuse.

La seconde partie du flux lumineux est dirigée par la fibre optique 21 sur un convertisseur opto-électronique 22.

Les convertisseurs opto-électroniques 13 et 22 qui peuvent être constitués par des photodiodes fournissent en sortie un signal électrique représentatif du signal lumineux transmis par la fibre optique 12 et par la fibre optique 21 respectivement.

Les signaux électriques correspondant sont amplifiés par des amplificateurs 23 et 24 respectivement.

Le signal électrique correspondant au signal Psx provenant d'un capteur 20 situé sur une voie de mesure activée à un instant donné est transmis à un amplificateur opérationnel 25 qui reçoit simultanément un signal de référence provenant d'une unité de traitement 30, par l'intermédiaire d'un conducteur 26. Le signal électrique correspondant au signal Pox de la source lumineuse située sur la voie activée est transmis à l'unité de traitement 30 par un conducteur 27. Les signaux électriques sont introduits dans l'amplificateur opérationnel 25 sous forme de tensions, respectivement Uc et Vref, générées par le passage du courant de mesure et par le passage du courant de référence dans des résistances de valeurs déterminées.

L'amplificateur 25 engendre en sortie une tension Vc = (Vref - Uc) x G,
avec G : gain de l'amplificateur.

Le générateur de courant 1 comporte une alimentation 31 et une voie de commande 32. La tension Vc ou tension de commande est envoyée sur la voie de commande 32 du générateur de courant 1 commandé en tension.

Le générateur de courant électrique 1 est commandé en tension, de manière que le courant transmis par le conducteur 6 à la diode électroluminescente de la voie activée commande l'émission d'une puissance lumineuse Pe telle que le courant électrique correspondant au signal lumineux Psx en sortie du capteur 20 engendre une tension Uc égale à la tension de référence Vréf.

L'amplificateur opérationnel 25 permet donc d'obtenir, à chaque instant, un réglage de la tension de mesure à une valeur égale à la tension de référence, par variation du courant d'alimentation de la source optique provenant du générateur de courant électrique 1.

L'unité de traitement 30 comporte un ensemble de modules de contrôle 28 dont le nombre correspond au nombre de voies de mesure ou encore au nombre des capteurs 20 situés dans la zone active III de l'installation.

Chacun des modules de contrôle 28 est relié à la ligne 26 et à la ligne 27, de manière que ces modules de contrôle reçoivent un signal représentatif de la puissance de la source lumineuse située sur chacune des voies de mesure et émettent un signal de référence d'amplitude voulue.

Les modules de contrôle 28 comportent également une entrée 29 permettant de faire parvenir aux modules de contrôle 28 correspondants plusieurs valeurs de seuil prédéterminées auxquelles seront comparés les signaux représentatifs des valeurs de Pox.

L'unité de traitement 30 comporte également un sélecteur de scrutation 33 comportant un nombre de voies de sorties correspondant au nombre des voies de mesure. Chacune des n + 1 voies de sorties 34 du sélecteur de scrutation 32 est reliée à un module de contrôle 28 et chacune des lignes de contrôle 6 des dispositifs de commande 4 des sources lumineuses 5 est également reliée à une voie de sortie 34.

Le sélecteur de scrutation 33 permet d'envoyer des signaux successivement sur chacun des dispositifs 4 afin d'assurer l'alimentation des sources 5 des diverses voies de mesure, de manière séquentielle.

Le signal de commande du sélecteur de scrutation permet d'activer simultanément le module de contrôle 28 de la voie de mesure correspondante qui assure la comparaison du signal Pox qui lui parvient de la voie de mesure 27 avec les valeurs de seuil introduites par la voie d'entrée 29.

L'unité de traitement 30 comporte en outre un module de traitement des alarmes 35, l'ensemble des éléments de l'unité de traitement 30 étant constitué par des circuits logiques et des composants électroniques.

La structure détaillée de ces éléments ne sera pas décrite, dans la mesure où ces éléments sont d'une structure classique et bien connue de l'électronicien et font partie des fournitures habituelles nécessaires pour le montage de dispositifs électroniques de contrôle.

Le dispositif de mesure optique suivant l'invention peut utiliser un capteur du type tout ou rien ou tout ou peu.

Dans le cas d'un capteur tout ou rien ou tout ou peu, l'obturateur du capteur peut occuper, suivant la valeur du paramètre à mesurer ou à déterminer, l'une de deux positions stables se traduisant, pour la première, par une transmission maximale du signal lumineux et, pour la seconde, par une transmission minimale.

Si l'on désigne par δ la fonction de transfert du capteur, cette fonction peut prendre soit une valeur δ max correspondant à la transmission maximale de la lumière, soit une valeur δ min correspondant à une transmission minimale de la lumière incidente.

Si l'on désigne par A le coefficient global des pertes en lignes aller et retour tenant compte de la réflexion à l'entrée du multiplexeur-démultiplexeur 18, par B le coefficient de pertes aller et retour dans le multiplexeur-démultiplexeur 18, la ligne 19 et le capteur 20, par $P_o$ la puissance de la source optique représentative de la mesure, par $P_{ref}$ la puissance du signal de référence introduit dans l'amplificateur opérationnel 25 et par $C_o$ le rapport de couplage du coupleur 11, on peut montrer que :

Dans le cas d'un capteur tout ou rien ou tout ou peu :

$P_o$ max = $P_{ref}$ + $C_o$/A + B min et $P_o$ min = $P_{ref}$ $C_o$/A + B max,

$P_o$ max et $P_o$ min étant les valeurs extrêmes de la puissance fournie par la source optique et représentative de la valeur à mesurer.

Pour un capteur analogique, on peut montrer que :

$P_{ref}$ $C_o$/A + B max < $P_o$ < $P_{ref}$ $C_o$/A + B min.

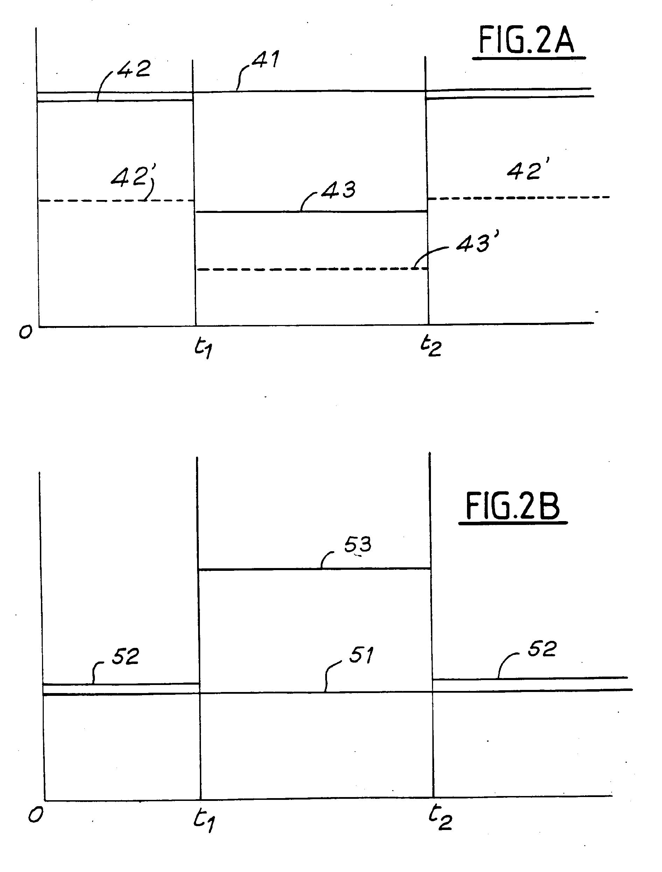

En se référant aux figures 2A et 2B, on va montrer les différences de fonctionnement et les avantages d'un dispositif de mesure optique suivant l'invention par rapport à un dispositif de mesure optique suivant l'art antérieur.

Sur la figure 2A, on a représenté, en fonction du temps, la valeur du flux du signal lumineux en sortie d'un capteur tout ou rien ou tout ou peu avec une source lumineuse de valeur constante, suivant la technique de l'art antérieur.

Sur la figure 2B, on a représenté les variations au cours du temps du flux lumineux en sortie du capteur et le flux lumineux de la source optique, dans le cas d'un dispositif de mesure suivant l'invention où le signal de sortie du capteur est maintenu constamment à une valeur de référence.

La courbe 41 représente le flux à l'entrée du capteur et provenant de la source lumineuse. Ce flux est supposé constant. Les courbes 42 et 43 représentent le flux réfléchi par le capteur suivant sa position. Entre les temps O et t1, le capteur est dans une première position et réfléchit la quasi-totalité du flux d'entrée 41 (première partie de la courbe 42).

La faible différence de flux qui se traduit par l'écart entre les courbes 41 et 42 correspond à l'atténuation du signal dans le capteur optique et dans les dispositifs de liaison entre la source et le capteur.

Du temps t1 au temps t2, le capteur passe de sa première position à sa seconde position, si bien que le signal réfléchi 43 est fortement atténué par rapport au signal d'entrée 41.

Dans la mesure où l'obturation du capteur n'est pas totale dans sa seconde position, il existe toujours une portion du signal qui est réfléchie, ce qui permet de contrôler la continuité de la ligne de mesure.

Après le temps t2, le capteur revient dans sa première position.

Les courbes 42 et 43 représentent les signaux à la sortie du capteur. Ces signaux sont envoyés sur un coupleur qui permet de transmettre une fraction du signal de mesure à un module de traitement opto-électronique.

Le signal 42' transmis au convertisseur opto-électronique a une valeur qui est au plus égale à 25 % du signal de la source puisque le signal Pox est au plus égal à 50 % du signal d'émission Pe de la diode 5 et que le signal Psx est lui-même au plus égal à 50 % du signal Pox, en fonction du facteur de division des coupleurs 11 et 15.

Le signal atténué 43' qui correspond à une atténuation du signal d'entrée dans le capteur comprise entre 30 et 50 % présente une puissance qui est au plus égale à 1/8e de la puissance de la source.

Les signaux électriques en sortie du convertisseur opto-électronique et correspondant au signal de sortie de la source sont donc d'amplitude relativement faible et nécessitent des composants électroniques à haute performance pour leur traitement;

Sur la figure 2B, on a représenté le signal 51 à la sortie d'un capteur 20, dans le cas de capteurs tout ou rien ou tout ou peu.

Suivant une caractéristique essentielle de l'invention, le signal 51 est maintenu constant grâce au pilotage de la source optique, par l'intermédiaire de l'amplificateur opérationnel 25.

Les parties de courbes 52 ou 53 représentent le flux lumineux de la source permettant d'obtenir un signal de sortie 51 du capteur constant au cours du temps.

Entre le temps 0 et le temps t1, l'obturateur du capteur n'occulte pas le faisceau lumineux. Le flux de la source n'est que très faiblement supérieur au flux en sortie du capteur, la différence provenant du coefficient d'absorption interne du capteur et des moyens de liaison entre la source et le capteur.

Entre les temps t1 et t2, l'obturateur occulte partiellement le faisceau lumineux et en conséquence, pour obtenir un signal constant en sortie du capteur, il est nécessaire d'augmenter la puissance de la source par l'intermédiaire du générateur électrique piloté par l'amplificateur opérationnel 25. Le flux lumineux de la source est représenté par la courbe 53.

Au-delà du temps t2, l'obturateur n'occulte pas le faisceau et la courbe 52 disposée légèrement au-dessus de la courbe 51 est représentative du flux lumineux de la source.

Le flux lumineux du signal prélevé par la fibre 12 grâce au coupleur 11 varie dans les mêmes proportions que le signal émis par la source lumineuse et représenté par la courbe 53.

Ce signal prélevé est converti en signal électrique par la photodiode 13. Le signal obtenu présente une amplitude beaucoup plus forte que le signal obtenu en sortie du capteur optique, dans le cas d'un dispositif de mesure optique suivant l'art antérieur. L'exploitation du signal électrique de mesure est donc beaucoup plus facile et ne nécessite pas l'utilisation de composants électroniques à haute performance.

Les signaux électriques Pox des différentes sources 5 activées successivement par le séquenceur 33 sont traités par les modules 28 dans lesquels les signaux électriques Pox sont comparés à deux premières valeurs de seuil.

On compare Pox à une valeur de seuil très faible pour déterminer si la source lumineuse correspondante n'a pas cessé d'émettre. Si Pox est inférieur à la valeur de seuil, un signal de défaut est émis sur la voie 36 du module 28.

On compare également Pox à une valeur de seuil élevée. Si Pox est supérieur à cette valeur élevée, un signal de défaut est émis. Ceci correspond au cas où le signal de sortie d'un capteur 20 est extrêmement faible, par exemple, si la liaison par fibre entre le capteur et le multiplexeur-démultiplexeur 18 est défaillante. Le signal de source Pox est alors très élevé puisque la différence entre le signal de sortie du capteur et le signal de référence est importante.

Enfin, le signal Pox est comparé à deux valeurs de seuil correspondant respectivement à la première position et à la seconde position du capteur ou de l'organe surveillé.

Si le signal Pox est supérieur à la valeur de seuil la plus élevée, on en déduit que le capteur et l'organe surveillé sont dans une première position. La voie de sortie 38 du module 28 est activée, par exemple pour allumer un voyant.

Si le signal Pox est inférieur à la valeur de seuil la moins élevée, on en déduit que le capteur et l'organe surveillé sont dans une seconde position. La voie de sortie 39 du module 28 est activée, par exemple pour allumer un voyant.

En revanche, si le signal Pox est compris entre les deux valeurs de seuil, un signal de défaut est émis sur la voie de sortie 36 du module 28. Ceci correspond au cas où la source lumineuse se trouve en fin de vie. Dans le cas où la source a subi un certain vieillissement, la puissance du flux lumineux de la source commandée par le générateur de courant électrique augmente de façon que le signal du capteur reste égal au signal de référence. Cependant, le générateur de courant électrique comporte un dispositif de limitation du courant à une valeur maximale, de façon à éviter de détruire la ou les diodes constituant la ou les sources lumineuses. Si, pour cette valeur du courant, la puissance du flux lumineux ne permet pas de rendre égaux le signal de sortie du capteur et le signal de référence, la valeur de Pox décroit. Le signal de la source devient inférieur à la valeur maximale de seuil. Un signal de défaut est donc émis sur une voie 36 lorsque le signal Pox est compris entre les deux valeurs de seuil. On peut également émettre un signal de défaut pour une valeur du courant inférieure à la limite d'utilisation des diodes, traduisant une limite de vieillissement à ne pas dépasser et alerter ainsi l'opérateur sur la nécessité de changer la diode correspondante.

En plus du vieillissement des diodes, d'autres fonctionnements incidentels peuvent se traduire par une augmentation du courant d'alimentation jusqu'à la valeur maximale admise. Il en est ainsi lorsqu'un capteur ne fonctionne pas correctement ou se trouve déconnecté ou encore en cas de coupure de la liaison optique d'un capteur ou de la liaison principale par fibre, en aval du deuxième coupleur. Dans tous les cas une alarme est déclenchée.

Si les différents défauts apparaissent sur une voie qui correspond à un rang déterminé, on obtient l'indication de la voie concernée.

Si les défauts apparaissent sur toutes les voies, on est certain que ces défauts concernent les parties de cheminement du flux communes à toutes les voies.

Les voies de sortie 38 et 39 ainsi que la voie de signalisation de défauts 36 peuvent être reliées à des voyants, des vérines d'alarme ou à des entrées de dispositifs informatiques de surveillance ou de réglage d'un processus industriel.

Sur la voie de mesure n + 1, le capteur 20 est remplacé par un corps noir 50 à absorption totale du flux lumineux à la sortie de la fibre optique correspondante 19 n + 1.

Sur cette voie de mesure, le signal de sortie du capteur tend vers une valeur faible, puisque le seul signal de retour est le signal de réflexion à l'entrée du démultiplexeur 18. Le signal de source Pox sur cette voie n + 1 tend vers $Pon+1 = P_{ref} C_o/A$. Ce terme dépend de l'ensemble des pertes en ligne et du rapport d'atténuation du coupleur.

La comparaison de ce signal à une valeur limite permet de surveiller l'évolution des composants communs aux différentes voies de mesure et de compenser par des moyens électroniques, les atténuations des signaux dues au vieillissement des composants, ce qui constitue un autre moyen de surveillance de l'installation.

Le procédé et le dispositif de surveillance suivant l'invention ont donc l'avantage d'effectuer un contrôle systématique de l'ensemble des éléments de mesure optique utilisés pour la surveillance.

En outre, chacune des voies de mesure est activée séquentiellement grâce au sélecteur de scrutation 33 si bien que les sources lumineuses ne sont utilisées que pendant un temps très court nécessaire pour effectuer la surveillance ou le contrôle de l'organe correspondant de l'installation.

On augmente ainsi la durée de vie de ces sources lumineuses, la durée d'utilisation cumulée pouvant être très faible par rapport à la durée d'utilisation de l'ensemble du dispositif. Les variations de l'intensité des sources lumineuses sont également sans effet sur la mesure.

En outre, dans la mesure où les signaux lumineux parviennent de manière séquentielle à des dispositifs de contrôle opto-électroniques, il est possible de réduire à une valeur très faible le nombre de ces dispositifs de contrôle et des amplificateurs associés.

On utilisera généralement seulement deux dispositifs de conversion opto-électroniques associés chacun à un amplificateur.

Enfin, les signaux Pox sur lesquels on effectue le traitement ont une amplitude sensiblement supérieure à celle des signaux de sortie des coupleurs. Il est ainsi possible d'éviter l'utilisation, pour le traitement des signaux, de composants électroniques à haute performance.

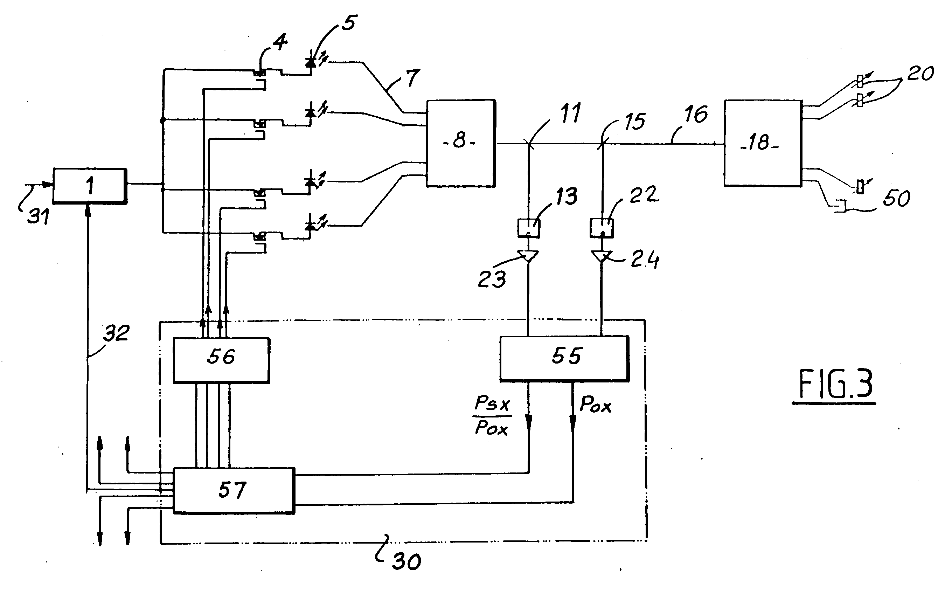

Sur la figure 3, on a représenté une première variante d'un dispositif permettant la mise en oeuvre d'un procédé de surveillance suivant l'invention.

Les éléments correspondants sur les figures 1 et 3 portent les mêmes repères.

Seule l'unité de traitement 30 et l'amplificateur opérationnel 25 ont été modifiés et remplacés par un microprocesseur qui assure toutes les fonctions des modules 25, 28 et 33 du mode de réalisation représenté sur la figure 1.

Ces fonctions ont été symbolisées, à l'intérieur du microprocesseur, par des rectangles 55, 56 et 57.

Le rectangle 55 correspond aux fonctions de l'amplificateur 25.

Le rectangle 56 correspond aux fonctions de commande séquentielle de synchronisation et d'adressage.

Le rectangle 57 correspond aux fonctions d'affichage des seuils, de comparaison, de signalisation et d'élaboration des alarmes.

Le microprocesseur constituant l'unité de traitement 30 peut être constitué par un microprocesseur du type 6081 ou 6083 commercialisé par la Société MOTOROLA.

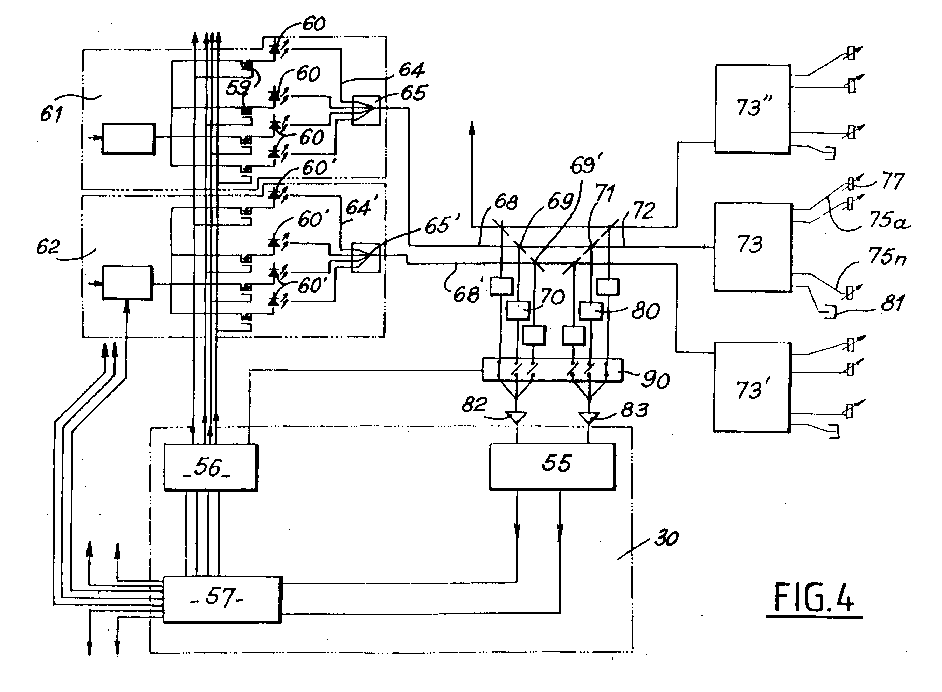

Sur la figure 4, on a représenté une seconde variante de réalisation d'un dispositif permettant la mise en oeuvre du procédé de surveillance suivant l'invention, en utilisant un grand nombre de voies de mesure et donc un grand nombre de capteurs permettant la surveillance de nombreux organes d'une installation industrielle.

Les différentes voies de mesure, dans leur partie d'émission sont séparées en plusieurs blocs d'émission tels que 61 et 62.

Dans chacun des blocs d'émission 61, 62, les sources optiques 60 sont constituées par des diodes électroluminescentes ou des diodes laser à bande étroite centrées chacune sur une longueur d'onde bien déterminée ne se recouvrant pas, les différentes longueurs d'onde et les différentes sources 60 étant toutes différentes.

Il n'est donc pas nécessaire de réaliser une sélection de longueur d'onde en utilisant un multiplexeur comme dans le mode de réalisation des figures 1 et 3.

Les sources 60 sont reliées par des fibres optiques 64 (ou 64') à un coupleur 65 (ou 65').

Chacun des coupleurs 65, 65', ... est relié par une fibre optique 68, 68' à un coupleur diviseur de faisceau 69 (69') qui divise le flux lumineux en deux parties sensiblement égales dont l'une est envoyée sur un convertisseur opto-électronique 70 et dont l'autre traverse un second coupleur diviseur de faisceau 71 pour être envoyé sans modification dans une fibre optique 72 de liaison entre le poste de conduite et la partie active de l'installation industrielle. L'extrémité de la fibre optique 72 parvenant dans la partie active de l'installation est reliée à un multiplexeur 73 qui réalise la séparation par longueur d'onde, sur ses voies de sortie, du signal complexe élaboré par le coupleur 65 et transmis par les fibres optiques 68 et 72 et par l'intermédiaire des coupleurs 69 et 71.

Chacune des voies de sortie du multiplexeur 73 est reliée, par l'intermédiaire d'une fibre optique 75, à un capteur optique 77 associé à un organe de la partie active de l'installation industrielle dont on assure la surveillance.

Les capteurs 77 sont des capteurs à réflexion du type tout ou peu réfléchissant la quasi totalité du flux lumineux reçu dans une première position et une proportion réduite de ce flux lumineux dans une seconde position, chacune des positions du capteur optique correspondant à une position de l'organe placé sous surveillance (par exemple la position d'ouverture et de fermeture d'une vanne).

Le flux lumineux réfléchi par le capteur 77 est renvoyé, par l'intermédiaire du multiplexeur 73 et de la fibre optique 72, sur un coupleur diviseur de faisceau 71 qui réalise la séparation du faisceau lumineux renvoyé par le capteur en deux parties sensiblement égales dont l'une est transmise à un convertisseur opto-électronique 80 et dont l'autre est renvoyée par l'intermédiaire du coupleur 69 de la fibre 68 et du coupleur 65 sur les sources optiques 60 sans modification de ces sources.

Chacun des blocs d'émission 61, 62, ... comporte un nombre de voies sur chacune desquelles est placée une source optique 60, identique au nombre de sorties du multiplexeur 73 correspondant et au nombre de capteurs 77 associés aux sorties du multiplexeur 73 par l'intermédiaire de fibres optiques 75.

Sur l'une des voies de mesure (voie n + 1), le capteur 77 est remplacé par un corps noir 81 assurant l'absorption totale du flux lumineux à la sortie de la fibre 75 n + 1.

Cette voie de mesure particulière permet, comme précédemment décrit, de surveiller l'évolution des composants communs aux différentes voies reliées au multiplexeur 73 et de compenser l'atténuation des signaux due au vieillissement de ces composants.

Le dispositif comporte en outre une unité de traitement 30 qui est constituée, comme dans le cas du dispositif représenté sur la figure 3, par un microprocesseur permettant d'assurer les différentes fonctions énumérées, dans le cas du microprocesseur 30 du dispositif représenté sur la figure 3.

En particulier, ce microprocesseur permet d'assurer la commande séquentielle de moyens de commande 59 permettant l'alimentation des sources 60, l'une à la suite de l'autre, pour activer successivement chacune des voies de mesure.

Le dispositif comporte en outre un module de commutation 90 auquel sont reliées par des conducteurs les sorties des convertisseurs opto-électroniques 70 et 80.

Les sorties du module de commutation 90 sont reliées par l'intermédiaire d'amplificateurs 82 et 83 au microprocesseur 30 permettant de traiter les signaux électriques correspondant aux signaux optiques reçus par les convertisseurs 70 et 80.

Les signaux reçus par les convertisseurs opto-électroniques 70 par l'intermédiaire des coupleurs 69 correspondent aux signaux des sources lumineuses des blocs d'émission 61 et 62.

Les signaux lumineux reçus par les convertisseurs opto-électroniques 80 correspondent aux signaux réfléchis par les capteurs 77 et transmis par l'intermédiaire des multiplexeurs 73 et des coupleurs 71.

Le module de commutation 90 est piloté par le microprocesseur 30 assurant une fonction de commande séquentielle de manière à faire parvenir aux amplificateurs 82 et 83 et au microprocesseur 30, à chaque instant, les signaux électriques correspondant aux signaux lumineux Pox et Psx de la voie de mesure en cours d'activation.

On obtient ainsi une scrutation séquentielle de chacun des capteurs 77 et donc une surveillance de chacun des organes auxquels sont associés ces capteurs.

Les avantages du dispositif représenté sur la figure 4 et du procédé de surveillance correspondant sont les mêmes que dans le cas des deux variantes décrites précédemment et sont liés au caractère séquentiel de l'utilisation des voies de mesure et de surveillance.

Cette variante permet de réaliser l'alimentation d'un grand nombre de capteurs mais suppose l'utilisation d'un grand nombre de diodes électroluminescentes ayant chacune un spectre étroit centré sur une longueur d'onde déterminée.

Il est également nécessaire d'utiliser un multiplexeur associé à chacun des blocs d'émission et un convertisseur opto-électronique associé à chacun des multiplexeurs.

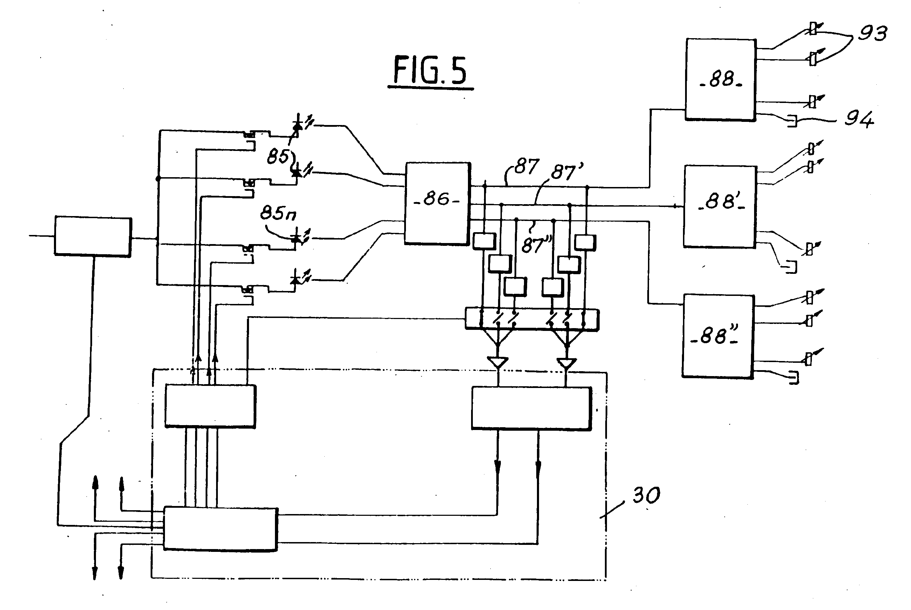

Sur la figure 5, on a représenté un dispositif selon une troisième variante de réalisation permettant de mettre en oeuvre le procédé suivant l'invention.

Dans ce dispositif, les sources lumineuses 85 sont reliées aux différentes entrées d'un multiplexeur-démultiplexeur 86 qui comporte plusieurs voies de sortie.

Dans le mode de réalisation décrit, trois fibres optiques 87, 87' et 87'' sont reliées à trois sorties différentes du multiplexeur-démultiplexeur 86. Ces sorties sont placées en des points bien précis sur le multiplexeur qui est réalisé sous la forme d'un polychromateur.

Si on alimente la source lumineuse 85n, cette source lumineuse émet un rayonnement d'une longueur d'onde centrée sur une longueur d'onde λn.

En sortie du multiplexeur-démultiplexeur 86, on obtient sur la voie centrale 87' une émission lumineuse centrée sur la longueur d'onde λn et sur les voies extrêmes 87 et 87'', des émissions lumineuses centrées sur les longueurs d'onde λn + Δλn et λn - Δλn.

Chacune des voies 87, 87' et 87'' permet de transmettre les émissions lumineuses correspondantes à des multiplexeurs-démultiplexeurs 88, 88' et 88''.

Les multiplexeurs-démultiplexeurs 88, 88' et 88'' comportent n + 1 voies de sortie 93 et un corps noir 94.

Chacun des capteurs 93 est alimenté par un rayonnement lumineux à bande spectrale étroite centrée sur une longueur d'onde bien déterminée.

On peut ainsi alimenter un grand nombre de capteurs sans avoir à augmenter dans les mêmes proportions le nombre de sources lumineuses 85.

Le traitement des signaux lumineux et des signaux électriques est effectué comme dans le cas du mode de réalisation représenté sur la figure 4, par une unité de traitement 30 constituée par un microprocesseur permettant de réaliser une alimentation séquentielle des sources 85 et une activation séquentielle des voies de mesure.

Les éléments correspondants sur les figures 4 et 5 permettant la conversion et le traitement séquentiel des signaux portent les mêmes repères.

Dans tous les cas, le procédé suivant l'invention et les dispositifs correspondants permettent de réaliser une surveillance d'un grand nombre d'organes dans la zone active d'une installation industrielle, par voie optique, c'est-à-dire sans interférence électrique entre les voies de mesure qui sont d'autre part totalement insensibles aux parasites émis par des dispositifs extérieurs, par exemple, dans la zone active de l'installation industrielle.

Le procédé et les dispositifs suivant l'invention ont également l'avantage d'alimenter chacune des sources lumineuses uniquement pendant le temps nécessaire pour réaliser la surveillance et le contrôle de l'organe correspondant.

Le procédé permet d'assurer à tout instant le contrôle de l'état des éléments optiques assurant la surveillance et en particulier de détecter très rapidement la perte d'une source lumineuse, un défaut dans la liaison optique ou un défaut d'un composant commun à l'ensemble des voies de mesure.

Les résultats de mesure sont insensibles aux variations dans le temps des caractéristiques des diodes électroluminescentes utilisées puisque les sources lumineuses sont ajustées de façon à obtenir un signal de retour constant, ce qui, pour une position du capteur définie, correspond à une source lumineuse constante.

Le procédé suivant l'invention permet de réduire le nombre des composants utilisés et notamment les convertisseurs opto-électroniques et les amplificateurs à haut gain utilisés pour amplifier les signaux électriques représentatifs des signaux Pox et Psx. Il permet également d'éviter d'utiliser des composants électroniques à haute performance, les signaux traités ayant toujours une amplitude relativement forte.

Le procédé et le dispositif suivant l'invention peuvent être appliqués à la surveillance des organes de toute installation industrielle complexe et plus particulièrement de toute installation présentant des zones sensibles tels qu'un réacteur nucléaire ou une unité de transformation chimique ou pétrochimique.

## Revendications

1. Procédé de surveillance séquentielle par voie optique d'une installation, avec contrôle du fonctionnement des moyens optiques de surveillance, consistant à émettre au moins deux signaux lumineux, à partir d'au moins deux sources lumineuses (5,60,85) alimentées par un générateur (1) de courant électrique, à sélectionner sur chacun des signaux lumineux un signal à bande spectrale étroite centrée sur une longueur d'onde déterminée, les longueurs d'onde des signaux sélectionnés étant toutes différentes, à faire parvenir les signaux de longueurs d'onde différentes dans une zone de mesure, à diriger les signaux suivant leur longueur d'onde pour envoyer chaque signal sur un capteur optique déterminé (20, 77, 93), à récupérer les signaux en sortie desdits capteurs optiques et à les convertir en un signal électrique puis à traiter chaque signal électrique obtenu pour obtenir l'état d'un organe surveillé, caractérisé par le fait :

– qu'on alimente les sources lumineuses (5, 60, 85) de manière séquentielle, de manière à créer des signaux lumineux successifs,

– qu'on compare, après conversion en signal électrique, chacun des signaux lumineux successifs provenant d'une source lumineuse à deux valeurs limites prédéterminées,

– qu'on détermine, en fonction des résultats des comparaisons effectuées, l'état de fonctionnement de chacune des sources et de chacun desdits moyens optiques de surveillance,

– qu'on compare l'amplitude du signal électrique correspondant au signal de sortie obtenu successivement pour chacun des capteurs, à un signal de référence,

– qu'on commande le générateur de courant électrique, successivement, en fonction du résultat de la comparaison du signal électrique correspondant au signal de sortie de chacun des capteurs et du signal de référence, de manière à rendre égales les amplitudes des deux signaux comparés,

– et qu'on détermine l'état du paramètre surveillé par comparaison du signal de la source lumineuse, après transformation en signal électrique à deux valeurs prédéterminées.

2. Procédé de surveillance suivant la revendication 1, caractérisé par le fait que chacune des sources lumineuses (5, 85) est constituée par une diode électroluminescente à large bande spectrale et qu'on prélève sur chacune de ces sources un signal lumineux à bande spectrale étroite centré sur une longueur d'onde prédéterminée.

3. Procédé de surveillance suivant la revendication 1, caractérisé par le fait que chacune des sources lumineuses (60) est constituée par une diode électroluminescente ayant un spectre de faible largeur centré sur une longueur d'onde déterminée et qu'on rassemble les signaux lumineux des différentes sources (60) sous la forme d'un signal lumineux complexe transmis, via une fibre optique 72, à un multiplexeur 73 relié, via une fibre optique 75, à chacun des capteurs optiques 77 de façon à transmettre les signaux des sources lumineuses (60) de manière groupée dans la zone active de l'installation.

4. Procédé de surveillance suivant l'une quelconque des revendications 1 à 3, caractérisé par le fait que l'un au moins des capteurs optiques (20, 77, 93) est remplacé par un dispositif (50, 81, 94) à absorption totale du flux lumineux, le rapport du signal dans la voie de mesure correspondant au dispositif à absorption totale par rapport au signal lumineux de la source permettant de surveiller l'évolution des composants communs aux différentes voies de mesure.

5. Procédé de surveillance suivant l'une quelconque des revendications 1 à 4, caractérisé par le fait que les capteurs (20, 77, 93) sont des capteurs à réflexion tout ou peu et qu'on détermine un premier état du capteur et de l'organe surveillé, dans le cas où le signal lumineux de la source lumineuse correspondante (5, 60, 85) est inférieur à une première valeur prédéterminée et un second état du capteur et de l'organe surveillé, dans le cas où le signal provenant de la source lumineuse correspondante est supérieur à une seconde valeur prédéterminé.

6. Dispositif de surveillance séquentielle par voie optique d'une installation industrielle comportant un poste de conduite et une zone active éloignée du poste de conduite comportant, à l'intérieur du poste de conduite, un ensemble de sources lumineuses (5, 60, 85) alimentées par un générateur (1) de courant électrique, un élément optique (8) permettant de regrouper les émissions lumineuses des sources (5, 60, 85), des moyens de prélèvement (11), de conversion en signaux électriques (13) et de traitement (23) des signaux lumineux des sources (5, 60, 85) ainsi que des moyens de prélèvement (15), de conversion (22) et de traitement (24) de signaux de mesure et de surveillance provenant de la zone active de l'installation, une fibre optique (16) de liaison entre le poste de conduite et la zone active de l'installation et, à l'intérieur de la zone active, au moins un multiplexeur-démultiplexeur (18) relié par une voie d'entrée à la fibre (16) et par une pluralité de voies de sortie à une pluralité de capteurs à réflexion, caractérisé par le fait qu'il comporte de plus, à l'intérieur du poste de conduite, un dispositif de commande séquentielle (33) permettant d'alimenter les sources (5, 60, 85) de manière séquentielle et de piloter des modules de traitement (28) des signaux lumineux transmis par les sources lumineuses, de manière séquentielle, en fonction de l'alimentation séquentielle de ces sources (5, 60, 85), un module (25) de comparaison entre un signal de référence transmis de manière séquentielle au module de comparaison (25) par un module de traitement (28) et chacun des signaux de sortie des capteurs, la sortie dudit module de comparaison étant reliée au générateur de courant électrique (1) pour faire varier le courant d'alimentation des sources lumineuses de manière à rendre égales les amplitudes des signaux de sortie des capteurs (20) et le signal de référence.

7. Dispositif de surveillance suivant la revendication 6, caractérisé par le fait que les sources lumineuses (5) sont constituées par des diodes électroluminescentes à large spectre et que l'élément optique (8) disposé dans le poste de conduite est constitué par un polychromateur (86) dont les voies d'entrée sont reliées chacune à une source lumineuse (5) de manière à prélever sur le signal de cette source lumineuse un signal à faible largeur spectrale centré sur une longueur d'onde déterminée.

8. Dispositif de surveillance suivant la revendication 6, caractérisé par le fait que les sources lumineuses (60) sont constituées par des diodes électroluminescentes à faible largeur spectrale centrées chacune sur une longueur d'onde déterminée et que l'élément optique (65) disposé dans le poste de conduite est constitué par un coupleur dont les voies d'entrée sont reliées chacune à une source lumineuse (60).

9. Dispositif de surveillance suivant la revendication 7, caractérisé par le fait que le polychromateur (86) disposé dans le poste de conduite comporte au moins deux voies de sortie (87, 87', 87″) reliées chacune à une voie d'entrée d'un multiplexeur (88, 88',

88″) disposé dans la zone active de l'installation industrielle.

10. Dispositif suivant la revendication 6, caractérisé par le fait qu'il comporte, à l'intérieur du poste de conduite, au moins deux blocs d'émission (61, 62) comportant chacun une pluralité desdites sources lumineuses (60) reliées à un moyen de couplage (65), le moyen de couplage (65) de chacun des blocs (61, 62) étant relié à un multiplexeur (73) disposé dans la zone active de l'installation.

11. Dispositif de surveillance suivant l'une quelconque des revendications 6 à 10, caractérisé par le fait qu'il comporte de plus un module de commutation électronique (90), piloté par ledit dispositif de commande séquentielle des sources (60), pour la commande séquentielle des moyens de traitement des signaux électriques correspondant aux signaux optiques provenant de la zone active de l'installation.

12. Dispositif suivant l'une quelconque des revendications 6 à 11, caractérisé par le fait que ledit dispositif de commande séquentielle des sources et les dispositifs de traitement des signaux électriques correspondant aux signaux provenant de la zone active sont réalisés sous la forme d'un microprocesseur (30).

13. Dispositif suivant la revendication 6, caractérisé par le fait que le générateur de courant électrique (1) est un générateur commandé en tension.

**Patentansprüche**

1. Verfahren zum sequentiellen optischen Überwachen einer Anlage mit einer Überprüfung der Funktionsfähigkeit der optischen Überwachungsmittel, bestehend aus folgenden Verfahrensschritten: Aussenden mindestens zweier Lichtsignale, ausgehend von mindestens zwei Lichtquellen (5, 60, 85), die durch eine Stromquelle (1) gespeist werden, Auswählen eines Signals mit schmaler Bandbreite aus jedem der Lichtsignale, das auf einer vorbestimmten Wellenlänge zentriert ist, wobei die Wellenlängen der ausgewählten Signale alle verschieden sind, Zuführen der Signale mit verschiedener Wellenlänge in einen Meßbereich, Führen der Signale je nach ihrer Wellenlänge, um sie anschließend auf einen vorbestimmten Detektor (20, 77, 93) zu lenken, Aufnehmen der Ausgangssignale der optischen Detektoren und Umwandeln dieser Signale in ein elektrisches Signal, wobei schließlich jedes erhaltene elektrische Signal verarbeitet wird, um den Zustand des Überwachungsorgans zu erfassen, dadurch gekennzeichnet, daß
– die Lichtquellen (5, 60, 85) sequentiell so gespeist werden, daß aufeinanderfolgende Lichtsignale erzeugt werden,
– daß nach der Umwandlung der elektrischen Signale jedes der aufeinanderfolgenden Lichtsignale, die von einer Lichtquelle ausgehen, mit zwei vorbestimmten Grenzwerten verglichen werden,
– daß in Abhängigkeit von dem Ergebnis des ausgeführten Vergleichs der Betriebszustand jedes der Lichtquellen und jedes der optischen Überwachungsorgane bestimmt wird,
– daß man die Amplitude des elektrischen Signals, das dem Ausgangssignal entspricht, das für jeden Detektor nacheinander erhalten wird, mit einem Bezugssignal vergleicht,
– daß die Stromquelle so gesteuert wird, in Abhängigkeit von dem Ergebnis des Vergleichs des elektrischen Signals, das dem Ausgangssignal eines jeden Detektors entspricht und dem Bezugssignal, derart, daß die Amplituden der beiden verglichenen Signale abgeglichen werden und
– daß der Zustand des zu überwachenden Parameters durch Vergleich des Signals der Lichtquelle nach der Umwandlung in ein elektrisches Signal mit zwei vorbestimmten Werten bestimmt wird.

2. Überwachungsverfahren nach Anspruch 1, dadurch gekennzeichnet, daß jede der Lichtquellen (5, 85) aus einer elektrolumineszenten Diode mit einem großen Spektralband besteht und daß von jeder dieser Lichtquellen ein schmalbandiges Lichtsignal entnommen wird, das auf eine vorbestimmte Wellenlänge zentriert ist.

3. Überwachungsverfahren nach Anspruch 1, dadurch gekennzeichnet, daß jede der Lichtquellen (60) aus einer elektrolumineszenten Diode besteht, mit einem schmalbandigen Immissionsspektrum, das auf eine vorbestimmte Wellenlänge zentriert ist, und dadurch, daß die Lichtsignale verschiedener quellen (60) in Form eines komplexen transmittierten Lichtsignals über eine optische Faser (72) auf einen damit verbundenen Multiplexer (73) über eine optische Faser (75) zu jedem der optischen Detektoren (77) übertragen werden, derart, daß die Signale der Lichtquellen (60) gebündelt in den aktiven Bereich der Anlage übertragen werden.

4. Überwachungsverfahren nach einem der Ansprüche 1-3, dadurch gekennzeichnet, daß mindestens einer der optischen Detektoren (20, 77, 93) durch eine Vorrichtung (50, 81, 94) zur vollständigen Absorption des Lichtflusses ersetzt ist, wobei das Verhältnis des Signals im Meßkanal, der der Vorrichtung zur vollständigen Absorption entspricht, zum Ausgangssignal der Lichtquelle es erlaubt, die Entwicklung der den verschiedenen Meßkanälen gemeinsamen Komponenten zu überwachen.

5. Überwachungsverfahren nach einem der Ansprüche 1-4, dadurch gekennzeichnet, daß die Detektoren (20, 77, 93) Detektoren einer vollständigen oder teilweisen Reflexion sind, und daß ein erster Zustand des Detektors und des Überwachungsorgans für den Fall festgelegt wird, in dem das Lichtsignal der entsprechenden Lichtquelle (5, 60, 85) unterhalb eines ersten vorbestimmten Wertes liegt und ein zweiter Zustand des Detektors und des überwachten Organs wird für den Fall festgelegt, indem das von der Lichtquelle ausgehende Signal größer als ein zweiter vorbestimmter Wert ist.

6. Vorrichtung zur sequentiellen optischen Überwachung einer Industrieanlage mit einer Steuereinheit und einem von dieser Steuereinheit entfernten aktiven Bereich, wobei die Vorrichtung im Inneren der Steuereinheit eine Gruppe von Lichtquellen (5, 60, 85) aufweist, die durch eine Stromquelle (1) gespeist werden, mit einem optischen Element (8), das es ermöglicht, die Lichtaussendung der Lichtquellen (5, 60, 85) zu gruppieren, Erfassungsorgane (11) zur Umwandlung von Lichtsignalen in elektrische Signale (13) und zur Behandlung (23) der Lichtsignale der Lichtquellen (5, 60, 85) sowie mit Organen zur Erfassung (15) zur Umwandlung (22) und zur Verarbeitung von (24) Meß- und Überwachungssignalen, die aus dem aktiven Bereich der Anlage herrühren, mit einer optischen Verbindungsfaser (16) zwischen der Steuereinheit und dem aktiven Bereich der Anlage und im Inneren des aktiven Bereiches mindestens einen Multiplexer-Demultiplexer (18), der über einen Eingangskanal mit der optischen Faser (16) und über mehrere Ausgangskanäle mit mehreren Reflexionsdetektoren verbunden ist, gekennzeichnet durch eine sequentielle Steuervorrichtung (33) im Inneren der Steuereinheit, die es ermöglicht, die Lichtquellen (5, 60, 85) sequentiell zu speisen und die Verarbeitungsmodule (28) der von den Lichtquellen übertragenen Lichtsignale derart sequentiell zu steuern, in Abhängigkeit von der sequentiellen Speisung der Lichtquellen (5, 60, 85) und durch ein Modul (25) zum Vergleich eines Bezugssignals, das sequentiell dem Vergleichsmodul (25) über ein Verarbeitungsmodul zugeführt wird und jedem der Ausgangssignale der Detektoren, wobei der Ausgang des Vergleichsmoduls mit der Stromquelle (1) verbunden ist, um den Speisestrom der Lichtquellen so zu variieren, daß Amplituden der Ausgangssignale der Detektoren (20) und des Bezugssignals abgeglichen werden.

7. Vorrichtung zur Überwachung nach Anspruch 6, dadurch gegekennzeichnet, daß die Lichtquellen (5) aus breitbandigen elektrolumineszierenden Dioden bestehen und daß das optische Element (8) in der Steuereinheit aus einem Polychromator (86) besteht, dessen Eingangskanäle mit jeder Lichtquelle (5) so verbunden ist, daß aus jedem Signal dieser Lichtquelle ein Signal mit schmaler spektraler Bandbreite entnommen wird, das auf einer vorbestimmten Wellenlänge zentriert ist.

8. Vorrichtung zur Überwachung nach Anspruch 6, dadurch gekennzeichnet, daß die Lichtquellen (60) aus elektrolumineszierenden Dioden mit kleiner spektraler Bandbreite sind, die jeweils auf eine vorbestimmte Wellenlänge zentriert sind und dadurch, daß das optische Element (65), das in der Steuereinheit angeordnet ist, aus einem Koppler besteht, dessen Eingangskanäle mit einer jeden der Lichtquellen (60) verbunden sind.

9. Vorrichtung zur Überwachung nach Anspruch 7, dadurch gekennzeichnet, daß der Polychromator (86), der in der Steuereinheit angeordnet ist, mindestens zwei Ausgangskanäle (87, 87', 87") aufweist, die jeweils an einen Eingangskanal eines Multiplexers (88, 88', 88") angeschlossen sind, der in dem aktiven Bereich der Industrieanlage angeordnet ist.

10. Vorrichtung nach Anspruch 6, gekennzeichnet durch mindestens zwei Emmissionsblöcke (61, 62) im Inneren der Steuereinheit, die jeweils mehrere der Lichtquellen (60) aufweisen, die an ein Koppelorgan (65) angeschlossen sind, wobei das Koppelorgan (65) eines jeden Blocks (61, 62) an einen Multiplexer (73) angeschlossen ist, der in dem aktiven Bereich der Anlage angeordnet ist.

11. Vorrichtung zur Überwachung nach einem der Ansprüche 6-10, gekennzeichnet durch ein elektronisches Umschaltmodul (90), das durch die sequentielle Steuervorrichtung der Lichtquellen (60) zur Durchführung der sequentiellen Steuerung der Verarbeitungsorgane der elektrischen Signale, die den optischen Signalen aus dem aktiven Bereich der Anlage entsprechen.

12. Vorrichtung nach einem der Ansprüche 6-11, dadurch gekennzeichnet, daß die Vorrichtung zur sequentiellen Steuerung der Lichtquellen und die Vorrichtung zur Behandlung der den Signalen entsprechenden elektrischen Signalen, die aus dem aktiven Bereich herrühren, in Form eines Mikroprozessors (35) ausgebildet sind.

13. Vorrichtung nach Anspruch 6, dadurch gekennzeichnet, daß die elektrische Stromquelle (1) eine spannungsgesteuerte Stromquelle ist.

**Claims**

1. Process for sequential optical surveillance of an installation, with monitoring of the operation of the optical surveillance means comprising emitting at least two light signals, from at least two light sources (5,60,85) supplied by an electric current generator (1) selecting, from each of the light signals a signal with a narrow spectral band centred on a particular wavelength the wavelengths of the selected signals all being different, causing the signals of different wavelengths to arrive in a measuring zone, directing the signals according to their wavelength in order to pass each signal to a predetermined optical sensor (20,77 93), recovering the signals at the output from the optical sensors and converting them into an electrical signal, then processing each electrical signal obtained in order to establish the condition of a component being monitored, characterised in that:

– the light sources (5,60,85) are supplied sequentially so as to create successive light signals,

– after conversion into an electrical signal, each of the successive light signals coming from a light source is compared with two predetermined limit values,

– the operational state of each source and of each of said optical surveillance means is determined as a function of the results of the comparisons carried out,

– the amplitude of the electrical signal corresponding to the output signal obtained successively for each sensor is compared with a reference signal,

– the electrical current generator is controlled successively, as a function of the results of the comparison of the electrical signal corresponding to the output signal of each of the sensors and the reference signal, so as to equalise the amplitudes of the two signals being compared,

– and the state of the parameter being monitored is determined by comparing the signal of the light source, after transformation into an electrical signal, with two predetermined values.

2. Surveillance process according to claim 1, characterised in that each of the light sources (5,85) comprises a light emitting diode with a wide spectral band and a light signal with a narrow spectral band centred on a predetermined wavelength is taken from each of these sources.

3. Surveillance process according to claim 1, characterised in that each of the light sources (60) comprises a light emitting diode having a narrow spectrum centred on a predetermined wavelength and the light signals from the different sources (60) are collected in the form of a complex light signal transmitted via an optical fibre (72) to a multiplexer (73) which is connected, via an optical fibre (75), to each of the optical sensors (77) so as to transmit the signals from the light sources (60) as a group in the active zone of the installation.

4. Surveillance process according to any of claims 1 to 3, characterised in that at least one of the optical sensors (20,77,93) is replaced by a device (50,81,94) for total absorption of the luminous flux, the ratio of the signal in the measuring path corresponding to the total absorption device in relation to the light signal from the source which makes it possible to monitor the development of the components which are common to the different measuring paths.

5. Surveillance process according to any one of claims 1 to 4, characterised in that the sensors (20,77,93) are reflective sensors to a greater or lesser extent and a first condition of the sensor and the component being monitored is determined, if the light signal from the corresponding light source (5,60,85) is less than a first predetermined value, and a second condition of the sensor and the component being monitored is determined if the signal coming from the corresponding light source is greater than a second predetermined value.

6. Apparatus for sequential optical surveillance of an industrial installation comprising a control post and an active zone at a distance from the control post, comprising, inside said control post, a set of light sources (5,60,85) supplied by an electrical current generator (1), an optical element (8) which makes it possible to group together the light emissions from the sources (5,60,85), means for sampling (11) the light signals from the sources (5,60,85), for converting them into electrical signals (13) and for processing (23) said light signals, and means for sampling (15) the measuring and surveillance signals coming from the active zone of the installation, means for converting (22) and treating (24) said measuring and surveillance signals, an optical fibre (16) connecting the control station to the active zone of the installation and, inside the active zone, at least one multiplexer-demultiplexer (18) connected by an input path to the fibre (16) and by a plurality of output paths to a plurality of reflective sensors, characterised in that it further comprises, inside the control station, a sequential control device (33) which enables the sources (5,60,85) to be supplied sequentially and to control the modules (28) for processing the light signals transmitted by the light sources, sequentially, as a function of the sequential supply to these sources (5,60,85), a module (25) for comparing a reference signal transmitted sequentially to the comparison module (25) by a processing module (28) with each of the output signals from the sensors, the output from said comparison module being connected to the electric current generator (1) in order to vary the supply current to the light sources, so as to equalise the amplitudes of the output signals from the sensors (20) and the reference signal.

7. Surveillance apparatus according to claim 6, characterised in that the light sources (5) comprise wide spectrum light emitting diodes and the optical element (8) arranged in the control station consists of a polychromator (86) the input paths of which are each connected to a light source (5) so as to sample, from the signal of said light source, a narrow spectrum signal centred on a predetermined wavelength.

8. Surveillance apparatus according to claim 6, characterised in that the light sources (60) comprise narrow spectrum light emitting diodes each centred on a particular wavelength and in that the optical element (65) arranged in the control station consists of a coupler the input paths of which are each connected to a light source (60).

9. Surveillance apparatus according to claim 7, characterised in that the polychromator (86) arranged in the control station has at least two output paths (87, 87',87") each connected to an input path of a multiplexer (88,88',88") arranged in the active zone of the

13

industrial installation.

10. Apparatus according to claim 6, characterised in that it comprises, inside the control station, at least two emission blocks (61,62) each having a plurality of said light sources (60) connected to coupling means (65), the coupling means (65) of each block (61,62) being connected to a multiplexer (73) arranged in the active zone of the installation.

11. Surveillance apparatus according to any of claims 6 to 10, characterised in that it further comprises an electronic switching module (90), controlled by said sequential control apparatus for the light sources (60), for the sequential control of the means for processing the electrical signals corresponding to the optical signals coming from the active zone of the installation.

12. Apparatus according to any one of claims 6 to 11, characterised in that said sequential control device for the light sources and the apparatus for processing the electrical signals corresponding to the signals coming from the active zone take the form of a microprocessor (30).

13. Apparatus according to claim 6, characterised in that the electric current generator (1) is a voltage-controlled generator.

FIG.1

FIG.2A

FIG.2B

FIG.3

FIG.4

EP 0 380 395 B1

FIG.5